# NEUE EUROPÄISCHE PATENTSCHRIFT

(11) **EP 2 030 091 B2**
(45) Veröffentlichungstag und Bekanntmachung des Hinweises auf die Entscheidung über den Einspruch: **26.09.2018**
(45) Hinweis auf die Patenterteilung: 29.09.2010
(21) Anmeldenummer: 07725257.5
(22) Anmeldetag: 16.05.2007
(51) Int. Cl.: G05B 19/042, G06F 13/38, H04L 12/00

(54) **VERFAHREN ZUR ADRESSIERUNG EINES GERÄTS**
METHOD FOR ADDRESSING A DEVICE
PROCÉDÉ D'ADRESSAGE D'UN DISPOSITIF

(30) Priorität: 01.06.2006 DE 102006026972
(43) Veröffentlichungstag der Anmeldung: 04.03.2009
(73) Patentinhaber: SEW-EURODRIVE GmbH & Co. KG, 76646 Bruchsal (DE)
(72) Erfinder: KROPP, Wolfgang, 65239 Hochheim (DE); SCHIFF, Andreas, 88069 Tettnang (DE)
(86) Internationale Anmeldenummer: PCT/EP2007/004341
(87) Internationale Veröffentlichungsnummer: WO 2007/137708

(56) Entgegenhaltungen:
- DE-A1- 10 038 860
- DE-A1- 19 639 212
- DE-B3-102004 032 839
- DE-U1- 20 023 852
- KRIESEL W ET AL: "ASI IM UEBERBLICK" AKTUATOR SENSOR INTERFACE FUER DIE AUTOMATION, 1994, Seiten 11-60, XP002062938

## Beschreibung

Die Erfindung betrifft ein Verfahren zur Adressierung.

AS-Interface als ein bit-orientierter Feldbus auf der untersten Ebene der Automatisierungspyramide bekannt aus:
- der Publikation R. Becker (Hrsg.): AS-Interface, die Lösung in der Automation, Gelnhausen (2002): AS-International Association, insbesondere Kapitel 3.2,
- dem Internet-Nachschlagewerk de.wikipedia.org,
- der DE 197 43 981 A1,
- der Norm EN 50295,
- der Internetseite http://www.as-interface.com/whatisasi.asp,
- der Präsentation "The AS-Interface Innovation Step 3.0" der AS-International Association vom 28.06.2005 und
- der Präsentation "As-Interface" http: //www.emg.ing.tu-bs.de/pdf/IKF/AS-i_SS04.pdf.

Er ist optimiert für den Anschluss von einfachen Sensoren, Aktuatoren und Feldgeräten, die nur wenige Informationsbits mit der Steuerung austauschen. In einem Datentelegramm von AS-Interface sind daher nur 4 Informationsbits vom Master zum Slave und wieder zurück übertragbar.

Moderne Feldgeräte, wie sie insbesondere in Anlagen mit dezentraler Steuerungstechnik Verwendung finden, benötigen aber oftmals zahlreiche Parameter, die zur Optimierung der Feldgerätefunktion variabel einstellbar sind.

Moderne Feldgeräte können darüber hinaus oftmals Diagnose- und Serviceinformationen sammeln, die eine schnelle Problembeseitigung im Störungsfall unterstützen. Hierzu zählen elektronisch übermittelbare Daten nicht nur über das Produkt, wie Hersteller, Typenbezeichnung, Produktionsdatum, Firmware-Stand, sondern auch über den Betrieb, wie Betriebsstunden, Anzahl der Start-/Stop-Vorgänge, Überlastzustände und dergleichen mehr.

Andere Feldgeräte, etwa zum Bedienen und Beobachten, weisen z.B. eine einfache Anzeige auf, auf der Messdaten ausgegeben werden und ein Tastenfeld, über das Kommandos an die Steuerung eingebbar sind. Auch hier sind verschiedene byte-orientierte und bit-orientierte Funktionen logisch einander zugeordnet, wobei erstere für die Anzeige und letzte für die Tasten zum Einsatz kommen.

Um diesem Umstand Rechnung zu tragen, sind in der Spezifikation Version 3.0 Slave-Profile eingeführt worden, die sowohl über bit-orientierte als auch über byte-orientierte Datenaustauschmechanismen verfügen, siehe beispielsweise die zitierte Publikation AS-Interface, die Lösung in der Automation. Hier sei beispielhaft das Profil S-7.A.5 genannt. Bei diesem Profil werden je 2 Bit für einen seriellen Datenaustausch verwendet, es bleiben daher nur 1 oder 2 Bits für den schnellen bit-orientierten Datenaustausch übrig. Dies wiederum ist für viele Anwendungen - z.B. in der Antriebstechnik - zu wenig.

Aus der DE 100 38 860 A1 ist ein ASI-Slave bekannt, bei welchem funktional mehrere Digitalteile und nur ein Analogteil vorgesehen sind. Hierdurch ist ein ASI-Slave zur Verfügung gestellt worden, mit dem auch Informationen mit einer größeren Anzahl an Informationsbits in möglichst wenigen Abfragezyklen und damit möglichst schnell übertragen werden können.

Der Erfindung liegt die Aufgabe zugrunde, den Datenaustausch bei einem Bussystem in einfacher und fehlerarmer Weise weiterzubilden.

Erfindungsgemäß wird die Aufgabe bei dem Verfahren nach den in Anspruch 1 angegebenen Merkmalen gelöst.

Wichtige Merkmale sind in Anspruch 1 angegeben. Vorteilig ist bei der Erfindung, dass über einen Anschluss zwei oder mehr Busteilnehmer an einen Bus anschließbar sind, was die Verkabelung vereinfacht. Auch können vorteilhaft durch die Bereitstellung mehrerer Busteilnehmer einerseits schnelle, bit-orientierte Daten und andererseits langsame, byte-orientierte, komplexer Daten ausgetauscht werden. Somit ist der Datenaustausch zwischen Master und Slave in einem Feldbus-System derart weitergebildet, dass je nach Anforderung verschiedene Datenaustauschmechanismen auf einfache und fehlerarme Weise einsetzbar sind. Von Vorteil ist weiter, dass ein Feldgerät eine Gruppe von Slaves enthält und somit über verschiedene Datenaustauschmechanismen unterschiedliche Datentypen mit einem Master austauschen kann.

Weiter ist vorgesehen, dass ein an einen Bus anschließbares Gerät in einem ersten Modus einen logischen Slave, insbesondere Busteilnehmer, realisiert, und in einem zweiten Modus mindestens zwei logische Slaves, insbesondere Busteilnehmer, realisiert. Somit wird vorteilhaft bewirkt, dass je nach Anforderungen, beispielsweise an den Datenaustausch, zwischen verschiedenen Modi gewechselt werden kann. Insbesondere ist somit beispielsweise für eine Initialisierung des Geräts oder die Integration in das Feldbussystem ein einfach handhabbarer Modus wählbar, während für einen komplexen Datenaustausch ein komplexer Modus mit mehreren Busteilnehmern wählbar ist.

Bei einer weiteren vorteilhaften Ausgestaltung ist im ersten Modus genau ein logischer Slave, insbesondere Busteilnehmer, realisiert. Von Vorteil ist dabei, dass die Inbetriebnahme, insbesondere Anmeldung im Feldbus-System oder Adresszuweisung, einfach vornehmbar ist.

Von Vorteil ist dabei, dass der Busteilnehmer an einen standardisierten Bus anschließbar ist. Somit ist die Vorrichtung modular in handelsüblichen Anlagen einsetzbar, insbesondere in Anlagen mit dezentraler Technik.

Bei einer weiteren vorteilhaften Ausgestaltung ist der erste Modus ein Standardadressiermodus. Erfindungsgemäß ist der zweite Modus ein erweiterter Adressiermodus. Von Vorteil ist dabei, dass bei Anschluss an einen ASinterface-Bus im ersten Modus eine Adresse zuweisbar ist, die im zweiten Modus für eine Mehrzahl von Busteilnehmern beziehungsweise logischen Slaves verwendbar ist, da im erweiterten Adressiermodus mit einer Adresse in den unterschiedlichen Zyklen unterschiedliche Slaves ansprechbar sind.

Bei einer weiteren vorteilhaften Ausgestaltung umfasst das Gerät eine Umschaltlogik, die bei einem Wechsel von einer Standardadresse, insbesondere von einer Auslieferungsadresse oder von Adresse "0", auf einen anderen Adressen-Wert das Gerät vom ersten in den zweiten Modus versetzt. Von Vorteil ist dabei, dass durch Standardvorgänge auf dem Bus ein Wechsel der Modi bewirkbar ist. Somit ist eine Erweiterung der Menge der über den Bus vermittelten Befehle und Kommandos vermeidbar.

Bei einer weiteren vorteilhaften Ausgestaltung arbeitet das Gerät bei Zuweisung der Adresse "0" im ersten Modus und bei Zuweisung einer Adresse ungleich "0" im zweiten Modus. Von Vorteil ist dabei, dass ein ohnehin notwendiger Vorgang, nämlich die Adresszuweisung an ein durch Adresse "0" als an den Bus neu angeschlossen ausgewiesenes Gerät, für das Umschalten in den komplexeren Modus verwendbar ist. Somit ist die Adressvergabe in einem einfachen Verfahren durchführbar, durch einen Master oder mithilfe eines handelsüblichen Adressiergerätes. Besonders vorteilhaft bei der Wahl der Adresse "0" als funktionsunterscheidendes Merkmal ist, dass AS-interface-Slave bei Auslieferung diese Adresse belegen. Somit stellt sich das Gerät bei Integration in ein AS-interface-Netzwerk bis zur Adressierung gegenüber dem Master als Standardslave dar. Für den Anwender besteht also vorteilhaft kein Unterschied zum Adressieren eines normalen Slaves, insbesondere gegebenenfalls eines AS-interface-Slaves. Nach Adressierung ist unmittelbar der zweite Modus bereitgestellt, der für den Hauptbetrieb des Feldgeräts vorgesehen ist. Weiter ist vorteilhaft die zugewiesene Adresse im zweiten Modus im erweiterten Adressiermodus, wie beispielsweise in der DE 102 06 657 A1 beschrieben, verwendbar. Es ist somit lediglich eine Adressvergabe für eine Mehrzahl von Slaves oder Busteilnehmern nötig. Es lassen sich deshalb vorteilhaft Doppeladressierungen vermeiden.

Bei einer weiteren vorteilhaften Ausgestaltung weisen die mindestens zwei logischen Slaves voneinander verschiedene Profile auf. Somit sind die realisierten Slaves für unterschiedliche Datenübertragungsmechanismen einsetzbar. Beispielsweise sind bit-orientierte Funktionen an einen Slave übertragbar und byte-orientierte Funktionen an einen weiteren Slave.

Weiter kann bei einem Gerät zum Anschluss an einen Bus vorgesehen sein, dass das Gerät einen Rechner umfasst, wobei im Rechner die state machine mindestens zweier Busteilnehmer abgebildet ist. Von Vorteil ist dabei, dass zwei oder mehr Busteilnehmer und/oder logische Slaves realisierbar sind.

Bei einer weiteren vorteilhaften Ausgestaltung umfasst das Gerät einen Slave-IC und den mit diesem verbundenen Rechner, insbesondere Mikroprozessor mit Speicher, wobei der Slave-IC im transparenten Modus verwendbar ist. Von Vorteil ist dabei, dass eine Kommunikation zwischen Bus und Mikroprozessor und eine Realisierung mehrerer Slaves einfach und kostengünstig ermöglicht ist.

Bei einer weiteren vorteilhaften Ausgestaltung ist der Busteilnehmer als AS-interface-Slave oder anderer Feldbus-Slave ausgebildet. Von Vorteil ist dabei, dass standardisierte Bus-Systeme einsetzbar sind, insbesondere bei Verwendung eines AS-interface-Busses.

Wichtige Merkmale der Erfindung bei dem Verfahren zur Adressierung eines an einen Bus anschließbaren Geräts sind in Anspruch 1 angegeben. Es kann somit vorgesehen sein, dass zwei logische Slaves umfasst sind, wobei
- das Gerät vor der Adressierung mit einer Standardadresse, insbesondere Adresse "0", versehen wird und in einem ersten Modus, insbesondere Standardadressiermodus, betrieben wird,
- dem Gerät eine andere Adresse zugewiesen wird,
- und dann das Gerät nach Adresszuweisung mindestens zwei logische Slaves realisiert.

Von Vorteil ist dabei, dass die Adressierung eines derartigen Geräts mit Jedem bereits auf dem Markt befindlichen Adressiergerät durchführbar ist. Von Vorteil ist weiterhin, dass die Adresse "0" die Standardadresse bei Auslieferung oder Neuanmeldung im Bussystem eines Busteilnehmers darstellt und standardmäßig eine Adresszuweisung durch einen Master nach sich zieht. Insbesondere muss der Master oder alternative der Anwender eines solchen Geräts nur einen Adressiervorgang für die mindestens zwei logischen Slaves durchführen.

Hierbei ist vorteilhaft, dass im Slave im Standardadressiermodus der gleiche Adressraum belegbar ist wie in den mindestens zwei logischen Slaves beispielsweise im erweiterten Adressiermodus. Der Adressvorgang ist somit vorteilhaft durchführbar, ohne dass die Gefahr der Doppeladressierung besteht.

Bei einem Umrichter kann somit vorgesehen sein, dass ein Gerät zum Anschluss an einen Bus integriert ist. Von Vorteil ist dabei, dass im Umrichter Mittel zur Kommunikation mit einem Bussystem vorsehbar sind. Somit ist der Umrichter vorteilhaft in Anlagen mit dezentraler Technik einsetzbar.

Bei einer weiteren vorteilhaften Ausgestaltung ist der Mikroprozessor des Geräts zum Anschluss an einen Bus in die Steuerung des Umrichters, insbesondere in die Ansteuerung der Leistungselektronik des Umrichters, integriert. Von Vorteil ist dabei, dass die ohnehin in der Steuerung des Umrichters vorhandene Rechenkapazität nutzbar ist für die Realisierung der logischen Slaves. Dies bewirkt vorteilhaft eine kompakte Bauform mit wenigen Komponenten.

Bei einer weiteren vorteilhaften Ausgestaltung sind Anschlussmittel für den Anschluss von Aktoren und/oder Sensoren und/oder einem Bus, beispielsweise MOVILINK®, und/oder Schaltausgänge und/oder umfasst, wobei diese Anschlussmittel und/oder Schaltausgänge vom Bus ansteuerbar beziehungsweise auslesbar sind. Von Vorteil ist dabei, dass der Umrichter mit den integrierten Mitteln zusätzlich zu seiner namensgebenden Funktion als Slave zur Abarbeitung einfachster Funktionen und auch als Knoten im Bus-Netzwerk einsetzbar ist.

Weitere Vorteile ergeben sich aus den Unteransprüchen.

### Bezugszeichenliste

1 Feldgerät
2 AS-i-Leitung
3 Slave
3A erster Slave
3B zweiter Slave
4 Anschlussleitung
5 interne Leitung
6 Kontakt
7 interne Leitung
8 Anschluss
10 Slave-IC
11 Mikroprozessor
12, 13, 14 interne Datenleitung
30 Zustand im ersten Modus
31 RESET-Signal
32 Standardadressierungs-Signal
33 Zustand im zweiten Modus
34 Weiterer Zustand im zweiten Modus
35 Buskommando, Sensordatum oder Aktorbefehl
50 Umrichter
52 Motor
53 Anschlusspunkt
54 Feldbus
55 Anschlussleitung
56 Steuerung
58 Slave
60 Leistungselektronik
62 Aktor
64, 66 Sensor
68 Bus

Die Erfindung wird nun anhand von Abbildungen näher erläutert:

Es zeigt:
- Figur 1 das Funktionsschaubild eines Feldgeräts nach Zuweisung der Adresse "0",
- Figur 2 das Funktionsschaubild eines Feldgeräts nach Zuweisung einer Adresse verschieden von "0",
- Figur 3 schematisch ein Feldgerät,
- Figur 4 die state machine eines Mikroprozessors,
- Figur 5 einen Umrichter mit Motor als Feldgerät.

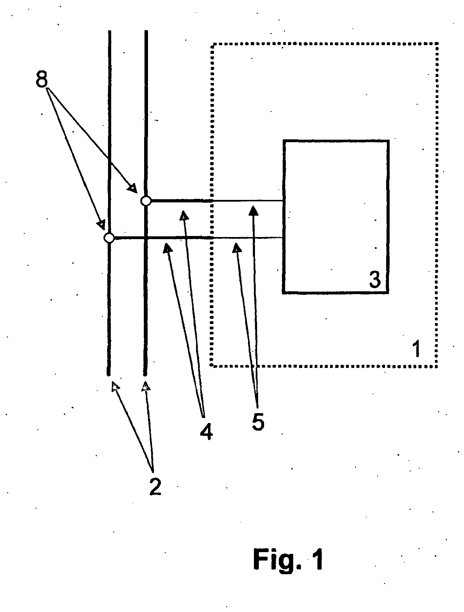

Figur 1 zeigt das Funktionsschaubild eines Feldgeräts 1, wenn diesem die Adresse "0" zugewiesen wurde. Dies ist zum Beispiel der Fall, wenn das Feldgerät 1 im Auslieferungszustand neu oder nach einer Wartung wieder im AS-interface-Netzwerk eingebaut wird.

Das Feldgerät 1 ist mit einer AS-interface-Leitung 2 über eine Anschlussleitung 4 und einen Anschluss 8 an einem Anschlusspunkt verbunden. Es nimmt über diese Anschlussleitung 4 am AS-interface-Netzwerk so teil, als wären die Anschlussleitungen 4 über innere Leitungen 5 mit einem Slave 3 verbunden, der ein Standardprofil, beispielsweise das Profil S-7.F.F, aufweist. Der Slave 3 und die inneren Leitungen 5 sind dabei virtuell, d.h. das Feldgerät 1 simuliert die dargestellte Funktion.

Ein ebenfalls an die AS-interface-Leitung angeschlossener Master kann nun das Feldgerät 1 anhand der Adresse "0" als neuen Teilnehmer erkennen und ihm in AS-interface-typischer Weise, wie es beispielsweise in der DE 197 43 981 A1 beschrieben wird, eine freie Adresse zuweisen. Diese Adresszuweisung ist alternativ mit einem handelsüblichen Adressiergerät durchführbar.

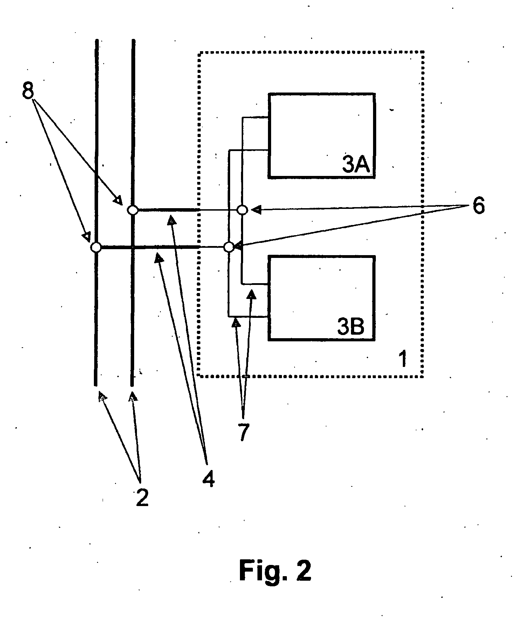

Figur 2 zeigt das Funktionsschaubild eines Feldgeräts 1, wenn diesem eine Adresse verschieden von "0" zugewiesen wurde. Dies kann zum Beispiel der Fall sein, wenn das Feldgerät 1 von einem Master als neuer Teilnehmer erkannt und mit einer freien Adresse belegt wurde.

Das Feldgerät 1 ist mit einer AS-interface-Leitung 2 über eine Anschlussleitung 4 an einem Anschluss 8 in einem Anschlusspunkt verbunden. Es nimmt über diese Anschlussleitung am AS-interface-Netzwerk im Unterschied zu dem in Figur 1 dargestellten Fall als Busteilnehmer des Bussystems so teil, als wären die Anschlussleitungen 4 über innere Leitungen 7, und eine innere Verzweigung 6 mit zwei Slaves 3A und 3B verbunden. Diese Slaves weisen vorteilhaft verschiedene Profile auf, beispielsweise Slave 3A das Profil S-7.A.7 für eine schnelle binäre und also bit-orientierte Ein- und Ausgabe und Slave 3B das Profil S-7.A.5 für zusätzliche digitale und also byte-orientierte Ein- und Ausgabe.

Das AS-interface-Netzwerk wird nun im erweiterten Adressiermodus betrieben, und der Slave 3A spricht auf die Adresse des Feldgeräts 1 im A-Zyklus an, während der Slave 3B auf die Adresse des Feldgeräts 1 im B-Zyklus anspricht.

Das Feldgerät 1 simuliert also den Anschluss zweier Slaves 3A und 3B an das AS-interface-Netzwerk, wobei Slave 3A die Adresse des Feldgeräts 1 als A-Adresse verwendet, während Slave 3B diese Adresse als B-Adresse benutzt. Aus einem logischen Slave bei Adresse "0" werden also zwei oder mehr logische Slaves mit beliebig vorgebbaren Profilen, wenn die Adresse ungleich "0" ist.

Bei einem weiteren beispiel simuliert das Feldgerät 1 den Anschluss von drei, vier oder mehr Slaves über die Anschlussleitung 4, wenn ihm nicht die Adresse "0" zugewiesen wurde. Für die Simulation von mehr als zwei Slaves werden dem Feldgerät mehr als eine Adresse zugewiesen, die in Analogie zu dem Beispiel von Figur 2 im erweiterten Adressierverfahren verwendbar sind, oder es wird ein Adressiermodus verwendet, der nach Art des erweiterten Adressiermodus drei, vier oder mehr verschiedene Zyklen aufweist.

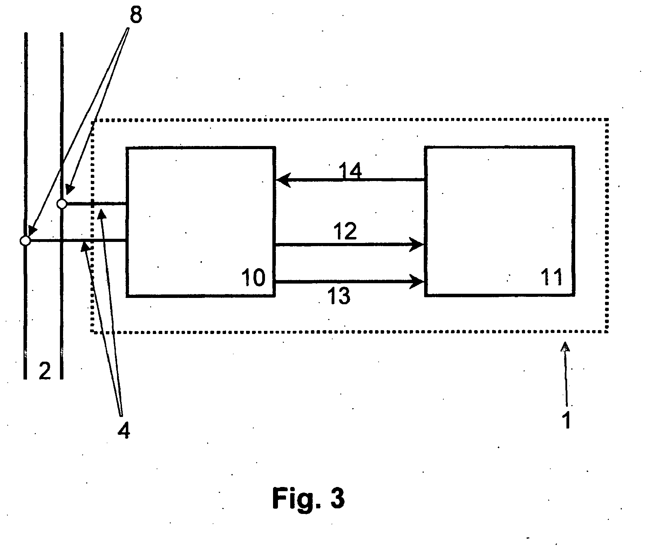

Figur 3 zeigt ein beispiel eines Feldgeräts. Ein Feldgerät 1 ist über Anschlussleitungen 4 mit einer AS-interface-Leitung 2 verbunden und umfasst einen handelsüblichen Slave-IC 10, also integrierten Schaltkreis, und einen Mikroprozessor 11. Der Slave-IC 10 wird im transparenten Modus betrieben und gibt also die von der AS-interface-Leitung 2 über die Anschlussleitungen 4 bezogenen Daten über eine interne Datenleitung 12 weiter an den Mikroprozessor 11 und von diesem über eine weitere interne Datenleitung 14 empfangene Daten an die AS-Interface-Leitung 2. Zusätzlich bezieht dieser Mikroprozessor 11 vom Slave-IC 10 das clock-Signal über eine weitere interne Datenleitung 13. In der Firmware des Mikroprozessors 11 ist die state machine mindestens eines AS-interface-Slaves abgebildet, also der Endliche Automat, der alle möglichen Zustände des AS-interface-Slaves und die erlaubten Übergänge zwischen diesen Zuständen modelliert. Derartige state machines werden in A. Hunt und D. Thomas: State Machines, IEEE Software November/December 2002, S. 10-12 beschrieben. In dem Mikroprozessor 11 sind somit zwei oder mehr logische Slaves realisierbar, und der Mikroprozessor 11 kann je nach zugewiesener Adresse, die von einem Adressiergerät oder dem Master über den Slave-IC 10 übermittelt wird, eine vorbestimmte Zahl von logischen Slaves simulieren.

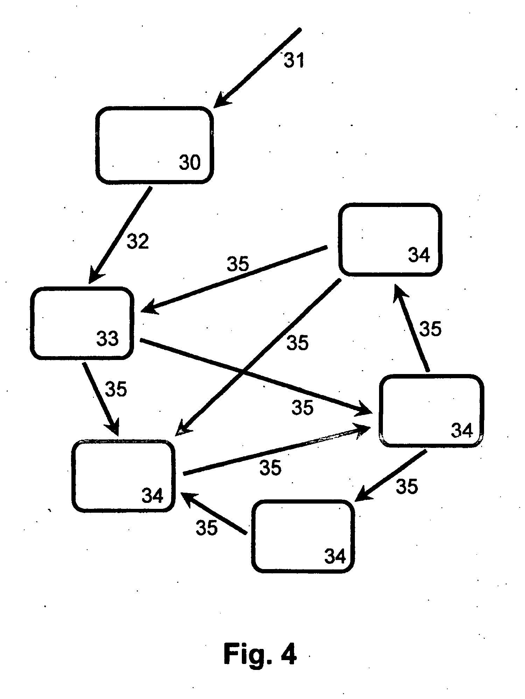

Figur 4 zeigt schematisch die state machine eines Mikroprozessors 11, wie er in Figur 3 einsetzbar ist. Nach einem RESET-Signal 31 oder im Auslieferungszustand befindet sich der Mikroprozessor 11 in einem ersten Modus 30, in dem er mittels Standardadressierungs-Signalen 32 vom AS-interface-Bus eine Adresse zugewiesen bekommt und in einen Zustand 33 eines zweiten Modus übergeht. Dieser Übergang ist durch eine Umschaltlogik bewirkbar. Der zweite Modus umfasst diesen Zustand 33 und weitere Zustände 34, die mindestens die möglichen Zustände zweier logischer Slaves 3A, 3B umfassen. Insbesondere beschreibt also der Zustand 33 zwei logische Slaves, die im erweiterten Adressiermodus betreibbar sind, ein jeder in einem der beiden Zyklen und mit der durch das Standardadressierungs-Signal 32 zugewiesenen Adresse. Zwischen diesen Zuständen 33, 34 werden durch Buskommandos, Daten von an den Mikroprozessor angeschlossenen Sensoren oder Aktoren oder durch die Abgabe von Kommandos an Aktoren Übergänge 35 bewirkt, wie sie für die Realisierung der mindestens zwei logischen Slaves 3A, 3B nötig und typisch sind.

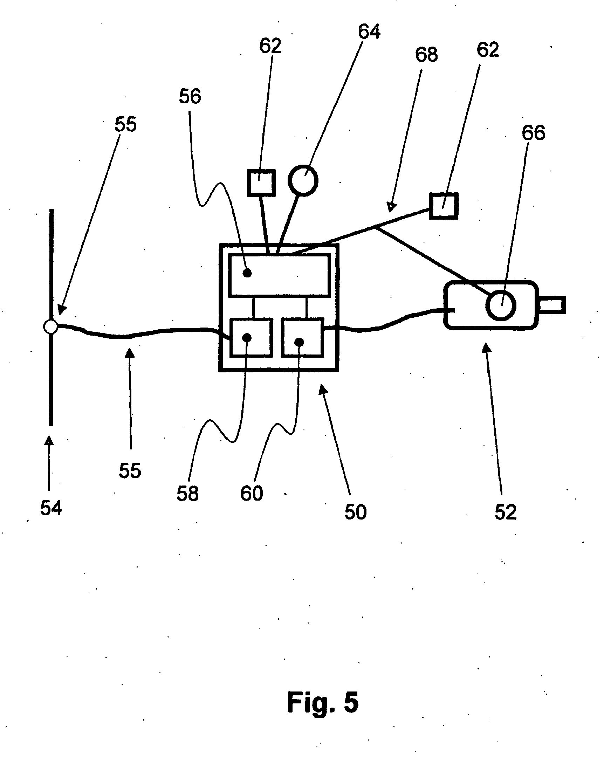

Figur 5 zeigt eine erfindungsgemäße Verwendung eines Feldgeräts aus Figur 1 bis 4. Das Feldgerät ist ein Umrichter 50, der an einen Elektromotor 52 angeschlossen ist und der diesen steuert oder regelt. Der Umrichter 50 ist weiterhin an einen Feldbus 54, einen AS-interface-Bus, angeschlossen, wobei genauer eine Anschlussleitung 55 einen vom Umrichter 50 umfassten Slave 58 über einen Anschlusspunkt 53 mit dem Feldbus 54 verbindet. Der Slave 58 ist somit im Umrichter 50 integriert; er wird im transparenten Modus betrieben. Ein Mikroprozessor, der als Steuerung 56 des Umrichters 50 ausgebildet ist, nimmt die vom Slave weitergeleiteten Daten gemäß der Anordung in Figur 3 auf und verarbeitet sie anhand einer in ihm hinterlegten state machine nach Figur 4. Die Steuerung 56 dient gleichzeitig der für einen Umrichter funktionstypischen Ansteuerung oder Regelung des Motors 52, und zwar durch Steuerung einer mit letzterem verbundenen Leistungselektronik 60. Der Mikroprozessor 11 aus Figur 3 ist also vorteilhaft in die ohnehin notwendige und also vorhandene Steuerung 56 des Umrichters 50 integriert. An die Steuerung 56 sind direkt oder über einen weiteren Bus 68 Aktoren 62 und Sensoren 64, 66 angeschlossen, die gegebenenfalls im Motor 52 integriert sind, wie für Sensor 66 beispielhaft gezeigt. Der Umrichter 50 ist somit als ein Feldgerät ausgebildet, wie es für Anwendungen der dezentralen Technik vorteilhaft ist.

Insbesondere sind im Umrichter 50 Mittel integriert, die eine Verwendung des Umrichters 50 als Busteilnehmer ermöglichen. Die erfindungsgemäße Bereitstellung zweier logischer Slaves durch eine entsprechende state machine in der Steuerung 56 bewirkt besonders vorteilhaft, dass zwischen Feldbus 54 und Umrichter 50 einerseits binäre Daten zur Ansteuerung von Aktoren 62 oder Sensoren 64, 66 austauschbar sind und dass andererseits byte-orientierte Daten beispielsweise in Form von Parametern für den Umrichter 50 oder von Befehlen zum Betrieb des Motors 52 oder in Form von Informationen über den Zustand von Umrichter 50 oder Motor 52 übergebbar sind.

## Patentansprüche

1. Verfahren zur Adressierung eines an einen ASI-Bus anschließbaren Geräts (1),
mit zwei logischen Slaves (3A, 3B),
wobei
- das Gerät (1) vor der Adressierung mit einer Standardadresse, insbesondere Adresse "0", versehen wird und in einem ersten Modus (30), insbesondere Standardadressiermodus, betrieben wird,
**dadurch gekennzeichnet, dass**
- dem Gerät (1) eine andere Adresse zugewiesen wird,
- und dann das Gerät (1) nach Adresszuweisung in einem zweiten Modus (33, 34) mindestens zwei logische Slaves (3A, 3B) realisiert,
- sodass für die Realisierung der mindestens zwei logischen Slaves (3A, 3B) nur ein Adressiervorgang durchgeführt werden muss,
- wobei nach der Adressierung unmittelbar der zweite Modus (33, 34) bereitgestellt ist,
- wobei der zweite Modus (33, 34) ein erweiterter Adressiermodus ist und die Slaves (3A, 3B) im erweiterten Adressiermodus (33, 34) mit der zugewiesenen Adresse alternierend jeweils in aufeinanderfolgenden Zyklen als A-Adresse beziehungsweise B-Adresse angesprochen werden.

## Claims

1. A method for addressing a device (1) which can be connected to an ASI bus,
with two logical slaves (3A, 3B),
wherein
- the device (1) before the addressing is provided with a standard address, in particular address "0", and is operated in a first mode (30), in particular standard addressing mode,
**characterised in that**
- the device (1) is assigned a different address,
- and then the device (1) after assignment of the address in a second mode (33, 34) configures at least two logical slaves (3A, 3B),
- so that only one addressing operation has to be carried out for configuring the at least two logical slaves (3A, 3B),
- wherein after the addressing the second mode (33, 34) is immediately made available,
- wherein the second mode (33, 34) is an extended addressing mode and the slaves (3A, 3B) in the extended addressing mode (33, 34) with the allocated address are each addressed in alternation in successive cycles as an A address or as a B address.

## Revendications

1. Procédé pour adresser un appareil (1) pouvant être raccordé à un bus ASI, avec deux esclaves logiques (3A, 3B)
dans lequel
- l'appareil (1) est muni, avant l'adressage, d'une adresse standard, en particulier l'adresse «0», et fonctionne dans un premier mode (30), en particulier un mode d'adressage standard,
**caractérisé en ce que**
- une autre adresse est assignée à l'appareil (1),
- et ensuite l'appareil (1) réalise après l'assignation d'adresse, dans un deuxième mode (33, 34), au moins deux esclaves logiques (3A, 3B),
- de sorte que pour la réalisation des au moins deux esclaves logiques (3A, 3B) seulement une opération d'adressage doit être réalisée,
- sachant que le deuxième mode (33, 34) est mis à disposition immédiatement après l'adressage
- et où le deuxième mode (33, 34) est un mode d'adressage étendu et que dans le mode d'adressage étendu (33, 34), les esclaves (3A, 3B) avec l'adresse assignée sont adressés en alternance, dans des cycles successifs, respectivement en tant qu'adresse A et qu'adresse B.
